# EUROPÄISCHE PATENTANMELDUNG

(11) **EP 4 296 377 A1**
(43) Veröffentlichungstag der Anmeldung: **27.12.2023**
(21) Anmeldenummer: 23179656.6
(22) Anmeldetag: 16.06.2023
(51) Int. Cl.: C21D 1/18, B21D 22/02, B21D 35/00, B21D 53/88, B62D 25/00, B62D 29/00, C21D 1/673, C21D 8/00, B21D 37/00

(54) **VERFAHREN ZUR HERSTELLUNG EINES EINSTÜCKIGEN PRESSGEHÄRTETEN TÜRRINGS FÜR EIN KRAFTFAHRZEUG, DER UNTERSCHIEDLICHE BLECHDICKEN UND FESTIGKEITEN AUFWEIST**

(30) Priorität: 22.06.2022 DE 102022115492
(71) Anmelder: VOLKSWAGEN AG, 38440 Wolfsburg (DE)
(72) Erfinder: Fandrich, Tobias, 38106 Braunschweig (DE)
(74) Vertreter: Bierschneider, Walter

(57) **Zusammenfassung**

Die Erfindung betrifft ein Verfahren zur Herstellung eines einstückigen pressgehärteten Türrings (200) für ein Kraftfahrzeug, der unterschiedliche Blechdicken (D1, D2, D3) und Festigkeiten (F1, F2) aufweist, umfassend:
- Bereitstellen eines flexibel gewalzten und somit bereichsweise unterschiedliche Blechdicken (D1, D2, D3) aufweisenden Stahlblechmaterials (S);
- Erzeugen einer Formplatine aus dem flexibel gewalzten Stahlblechmaterial (S), wobei die Formplatine wenigstens einen Türöffnungsausschnitt aufweist;
- Erwärmen der Formplatine;
- Einlegen der erwärmten Formplatine in ein Presshärtewerkzeug und Ausführen eines Presshärtevorgangs bei dem der Türring (200) in die vorgesehene Endgeometrie umgeformt und bereichsweise unterschiedlich gehärtet wird.

## Beschreibung

Die Erfindung betrifft ein Verfahren zur Herstellung eines einstückigen pressgehärteten Türrings für ein Kraftfahrzeug, der unterschiedliche Blechdicken und Festigkeiten aufweist.

Beim sogenannten Presshärten wird ein presshärtegeeignetes Stahlblechmaterial auf Austenitisierungstemperatur erwärmt und in einem gekühlten Werkzeug (Presshärtewerkzeug) geformt und gleichzeitig abgekühlt, wobei es aufgrund eines martensitischen Härtungseffekts zu einer Härte- bzw. Festigkeitssteigerung kommt (typischerweise korrelieren Härte und Festigkeit). Das Presshärten ist als solches aus dem Stand der Technik bekannt, wozu im Weiteren auf entsprechende Patent- und Fachliteratur verwiesen wird.

Ein sogenannter Türring (Door-Ring) ist ein Seitenwand-Karosseriebauteil, das zumindest eine Türöffnung, d. h. die Vordertüröffnung und/oder die Fondtüröffnung, vollständig umrandet. Ein solcher Türring kann aus mehreren Blechformteilen zusammengebaut werden. Ferner kann ein solcher Türring auch als einstückiges Blechformteil hergestellt werden, womit viele Vorteile einhergehen, wie bspw. Entfall toleranzanfälliger Fügeprozesse, Reduzierung der Fertigungszeit, Gewichtsverringerung (durch Wegfall von Fügeflanschen) und Verbesserung der Maßhaltigkeit.

Die DE 11 2017 003 027 T5 beschreibt ein Verfahren zum Fertigen eines Türrings, der eine Mehrzahl von Säulen und Holmen beinhaltet, die zumindest eine Türöffnung umgeben. Das Verfahren beinhaltet zunächst ein Bereitstellen eines Türring-Rohteils, das zumindest einen Türöffnungsabschnitt definiert. Das Türring-Rohteil beinhaltet darüber hinaus zumindest einen Verstärkungsabschnitt, der sich durch den zumindest einen Türöffnungsabschnitt erstreckt. Das Verfahren wird durch Erwärmen des Türring-Rohteils und Anordnen des erwärmten Türring-Rohteils in einer Prägeform fortgesetzt. Anschließend wird das Verfahren durch Heißprägen des Türring-Rohteils in der Form zum Ausbilden des Türrings und der zumindest einen Verstärkung fortgesetzt. Während des Heißprägeschritts befindet sich die zumindest eine Verstärkung in einem freien Raum zwischen den Säulen- und Holmabschnitten des Türring-Rohteils. Nach dem Heißprägeschritt wird das Verfahren durch Entfernen des/der geprägten Türrings und Verstärkung aus der Prägeform und Übergeben der ausgebildeten Bauteile an eine getrennte Station zum Entfernen der zumindest einen Verstärkung, zum Beispiel durch Laser oder Schneiden, aus dem Türring fortgesetzt. Nach dem Entfernen der zumindest einen geprägten Verstärkung wird das Verfahren durch Anbringen der zumindest einen Verstärkung an dem Türring an einer gewünschten Stelle fortgesetzt.

Bei dem aus der DE 11 2017 003 027 T5 vorbekannten Verfahren wird den bereichsweise bzw. lokal unterschiedlichen Festigkeitsanforderungen an einen Türring dadurch Rechnung getragen, dass im Bereich eines ansonsten als Blechabfall zu entsorgenden Türausschnitts beim Heißprägen ein Verstärkungsteil mitgeformt, dann aus dem geprägten Türring entfernt und anschließend an einer gewünschten Stelle des Türrings angebracht wird.

Ausgehend von dem vorausgehend erläuterten Stand der Technik liegt der Erfindung die Aufgabe zugrunde, ein verbessertes und insbesondere unter wirtschaftlichen Gesichtspunkten optimiertes Verfahren zur Herstellung eines pressgehärteten Türrings, der bereichsweise unterschiedliche Festigkeitsanforderungen erfüllt bzw. diesen gerecht wird, anzugeben.

Die Aufgabe wird gelöst durch das erfindungsgemäße Verfahren des Patentanspruchs 1. Vorteilhafte Weiterbildungen und Ausgestaltungen der Erfindung ergeben sich aus den abhängigen Patentansprüchen, der nachfolgenden Erfindungsbeschreibung (dies schließt ausdrücklich auch beispielhaft und optional beschriebene Merkmale ein) und den Figuren.

Das erfindungsgemäße Verfahren zur Herstellung eines einstückigen pressgehärteten Türrings für ein Kraftfahrzeug, der unterschiedliche Blechdicken und Festigkeiten aufweist, umfasst zumindest die folgenden Schritte:
- Bereitstellen eines flexibel gewalzten und somit bereichs- bzw. abschnittweise unterschiedliche Blechdicken aufweisenden Stahlblechmaterials;
- Erzeugen einer Formplatine aus dem flexibel gewalzten Stahlblechmaterial, wobei die Formplatine wenigstens einen Türöffnungsausschnitt aufweist;
- Erwärmen der Formplatine;
- Einlegen der erwärmten Formplatine in ein Presshärtewerkzeug und Ausführen eines Presshärtevorgangs bei dem der Türring in seine vorgesehene Endgeometrie umgeformt wird (sodass danach keine weitere Umformung mehr erfolgt) und auch bereichsweise unterschiedlich gehärtet bzw. pressgehärtet wird.

Der erfindungsgemäß hergestellt Türring ist ein einstückiges (d. h. in einem Stück hergestelltes) pressgehärtetes Blechformteil, das wenigstens eine vollständig umrandete bzw. umlaufend geschlossene Türöffnung aufweist, wobei es sich insbesondere um eine Vordertüröffnung handelt. Der Türring kann auch zwei vollständig umrandete bzw. umlaufend geschlossene Türöffnungen (Vordertüröffnung und Fondtüröffnung) aufweisen (Double-Door-Ring). Der erfindungsgemäß hergestellte Türring wird den bereichsweise unterschiedlichen Festigkeitsanforderungen dadurch gerecht, dass dieser bereichsweise unterschiedliche Blechdicken und Festigkeiten aufweist. Damit ist gemeint, dass der Türring wenigstens zwei sich in ihren Blechdicken unterscheidende Bereiche und wenigstens zwei sich in ihrer Festigkeit bzw. Härte unterscheidende Bereiche, die sich insbesondere auch in ihrer Duktilität unterscheiden, aufweist. Dabei kann vorgesehen sein, dass die Festigkeitsbereiche (damit sind die jeweils eine bestimmte Festigkeit aufweisenden Bereiche bzw. Zonen gemeint) und Blechdickenbereiche (damit sind die jeweils eine bestimmte Blechdicke aufweisenden Bereiche bzw. Zonen gemeint) sowohl kongruent bzw. deckungsgleich als auch inkongruent angeordnet sind.

Das erfindungsgemäße Verfahren ermöglicht die vergleichsweise einfache und kostengünstige Herstellung eines hinsichtlich der Festigkeitsanforderungen sowie insbesondere auch Crashanforderungen optimierten pressgehärteten Türrings, wobei zudem auch eine Gewichtsoptimierung gelingen kann. Mit der Erfindung gehen weitere Vorteile einher, wie bspw. eine niedrige Fehleranfälligkeit und eine hohe Prozessrobustheit.

Erfindungsgemäß wird der Türring aus einem flexibel gewalzten und somit bereichs- bzw. abschnittsweise unterschiedliche Blechdicken aufweisenden Stahlblechmaterial hergestellt. Das flexibel gewalzte Stahlblechmaterial kann in Form einer Blechtafel oder eines Blechbands bereitgestellt oder auch in einem, insbesondere unmittelbar, vorausgehenden Schritt hergestellt werden. Das flexible Walzen und ein flexibel gewalztes Blechmaterial sind aus dem Stand der Technik bekannt, wozu bspw. auf die DE 10 2012 110 972 B3 (sowie auch auf den darin weiterhin genannten Stand der Technik) verwiesen wird. Ein flexibel gewalztes Blechmaterial zeichnet sich u. a. durch kontinuierliche bzw. stetige (d. h. sprungfreie) Blechdickenübergänge aus, die beim flexiblen Walzen gezielt eingestellt werden können.

Das flexibel gewalzte Stahlblechmaterial sowie die daraus erzeugte Formplatine (s. u.) sind einstückig (d. h. in einem Stück hergestellt) und insbesondere auch monolithisch (d. h. ohne Fügestellen aus einem einzelnen Blechstück bestehend) ausgebildet. Somit ist auch der aus dem Stahlblechmaterial bzw. der Formplatine hergestellte Türring einstückig und monolithisch ausgebildet. Die mit verschweißten Platinen (Tailored Welded Blanks bzw. TWB) einhergehenden Nachteile treten somit bei der Erfindung nicht auf.

Das zum flexiblen Walzen verwendete bzw. flexibel gewalzte Stahlblechmaterial ist presshärtungsgeeignet (bspw. 22MnB5 oder CR1500) und kann auch eine Zunder- und/oder Korrosionsschutzbeschichtung (bspw. eine AlSi- oder Zn-Beschichtung) aufweisen. Das Stahlblechmaterial weist bevorzugt auch eine homogene bzw. einheitliche oder zumindest im Wesentlichen homogene bzw. einheitliche Blechgüte auf. (Mit Blechgüte sind insbesondere die mechanischen Eigenschaften des Stahlblechmaterials, wie bspw. Festigkeits- und Dehnungskennwerte, gemeint.) Selbiges gilt sinngemäß auch für die aus dem Stahlblechmaterial erzeugte Formplatine.

Aus dem flexibel gewalzten Stahlblechmaterial wird eine sogenannte Formplatine erzeugt, insbesondere durch Ausschneiden. Das Ausschneiden kann durch mechanisches Schneiden, bspw. in einer Schneid- oder Stanzpresse mit entsprechend ausgebildetem Werkzeug, oder mittels Laser, bspw. in einer Laserschneidstation, erfolgen. Die Formplatine weist wenigstens einen der Türöffnung des Türrings entsprechenden Türöffnungsausschnitt auf. D. h., dieser Türöffnungsausschnitt ist für Ausbildung einer vollständig umrandeten bzw. umlaufend geschlossenen Türöffnung des Türrings vorgesehen und ist daher ebenfalls vollständig umrandet bzw. in sich geschlossen. Die Formplatine weist ferner eine durch den herzustellenden Türring bestimmte Umrissgeometrie auf, wobei diese Umrissgeometrie (d. h. der Außenumriss sowie auch der Innenumriss des Türöffnungsausschnitts) bevorzugt zumindest näherungsweise der Umrissgeometrie einer ebenen Abwicklung des herzustellenden Türrings entspricht. Die Formplatine ist bevorzugt eben ausgebildet. Eine durch flexibles Walzen erzeugte Platine bzw. Formplatine kann auch als Tailored Rolled Blank (TRB) bezeichnet werden.

Die Formplatine wird zunächst erwärmt, womit ein Erwärmen auf Austenitisierungstemperatur gemeint ist, was bspw. in einem Ofen erfolgen kann. Anschließend wird die erwärmte und noch unverformte bzw. ebene Platine in das Presshärtewerkzeug eingelegt, wo im Rahmen des Presshärtevorgangs dann die Umformung (Warmumformung) und Härtung erfolgt. Diese bevorzugte Vorgehensweise wird auch als direktes Presshärten bezeichnet. Die Erfindung ist allerdings auch für das indirekte Presshärten, bei dem zunächst ein Vorformen der Platine erfolgt, anwendbar.

Das erfindungsgemäße Verfahren wird so ausgeführt, dass der hergestellte Türring bereichsweise unterschiedliche Festigkeiten aufweist. Damit ist insbesondere gemeint, dass bereichsweise unterschiedliche Werkstoffgefüge bzw. Gefügezusammensetzungen erzeugt werden, sodass sich im hergestellten Türring bereichsweise unterschiedliche mechanische Kennwerte, insbesondere Festigkeits- und Dehnungskennwerte, einstellen. Dies kann grundsätzlich unabhängig von der jeweiligen Blechdicke erfolgen. Typischerweise zeichnet sich ein weniger fester Bereich (im Vergleich zu einem festeren Bereich) durch eine höhere Duktilität aus.

Bevorzugt ist vorgesehen, dass die Formplatine homogen erwärmt und vor dem Einlegen in das Presshärtewerkzeug bereichsweise abgekühlt wird, sodass dann im Presshärtewerkzeug eine bereichsweise unterschiedliche Härtung bzw. Presshärtung erfolgt. Damit ist insbesondere gemeint, dass die Formplatine nach einem homogenen Erwärmen und vor dem Einlegen in das Presshärtewerkzeug zumindest in einem Bereich gezielt abgekühlt bzw. in der Temperatur gesenkt wird, sodass sich dann (im Presshärtewerkzeug) in diesem Bereich ein vergleichsweise weiches Gefüge ausbildet, indem die martensitische Härtung verringert oder verhindert wird und sich bspw. ein im Wesentlichen ferritisches, perlitisches oder bainitisches Gefüge einstellt. Diese Vorgehensweise wird auch als "thermisches Printen" bezeichnet. Ebenso kann vorgesehen sein, dass die Formplatine unterschiedlich erwärmt wird, insbesondere derart, dass wenigstens ein Bereich auf eine oberhalb der Austenitisierungstemperatur liegende Temperatur erwärmt wird und wenigstens ein Bereich auf eine unterhalb der Austenitisierungstemperatur liegende Temperatur oder gar nicht erwärmt wird.

Alternativ kann vorgesehen sein, dass die Formplatine homogen erwärmt und in ein bereichsweise unterschiedlich gekühltes Presshärtewerkzeug eingelegt wird, sodass dann während des Presshärtevorgangs eine bereichsweise unterschiedliche Härtung erfolgt, insbesondere derart, dass in wenigstens einem stärker gekühlten Werkzeugbereich eine martensitische Härtung stattfindet und in wenigstens einem geringer gekühlten oder eventuell sogar auch beheizten Werkzeugbereich die martensitische Härtung verringert oder verhindert wird.

Bevorzugt erfolgt noch im Presshärtewerkzeug ein Konturbeschnitt bzw. wird noch im Presshärtewerkzeug ein Konturbeschnitt des Türrings ausgeführt. Dies kann sowohl die Außenkontur als auch die Innenkontur (d. h. die Türöffnung) betreffen. Ebenso kann noch im Presshärtewerkzeug ein Lochen (zum Erzeugen von Löchern) erfolgen. Dies erfolgt insbesondere mit der Zielsetzung, dass am Türring nach der Entnahme aus dem Presshärtewerkzeug keine weiteren Schnittoperationen mehr erforderlich sind. Insbesondere ist vorgesehen, dass der Konturbeschnitt und/oder das Lochen erfolgen, bevor das Blechmaterial (Stahlblechmaterial) an der Schnitt- bzw. Lochungslinie vollständig abgekühlt ist bzw. solange das Blechmaterial (an der Schnitt- bzw. Lochungslinie) noch warm ist und insbesondere noch eine Temperatur von 100°C bis 200°C aufweist. Dies kann auch als Warmbeschnitt bzw. Warmlochen bezeichnet werden.

Bevorzugt wird die Formplatine derart erzeugt, insbesondere aus dem flexibel gewalzten Stahlblechmaterial (typischerweise als Blechtafel oder Blechband vorliegend) ausgeschnitten, dass sich der wenigstens eine Blechdickenübergang bzw. die Blechdickenübergänge (zwischen den Blechdickenbereichen bzw. zwischen den sich in ihrer Blechdicke unterscheidenden Bereichen) im Wesentlichen in Längsrichtung des herzustellenden Türrings, also in x-Richtung eines Fahrzeugkoordinatensystems, erstrecken (Variante 1). Notabene verläuft die jeweilige Blechdickenzunahme oder -abnahme senkrecht hierzu, also in diesem Fall in Hochrichtung des herzustellenden Türrings bzw. in z-Richtung des Fahrzeugkoordinatensystems. Die Formplatine kann aber auch derart erzeugt werden, dass sich die Blechdickenübergänge in Hochrichtung des herzustellenden Türrings, also in z-Richtung eines Fahrzeugkoordinatensystems, erstrecken (Variante 2) oder schräg zur Hoch- und Längsrichtung erstrecken (Variante 3). Letzteres ermöglicht trotz herstellungsbedingter paralleler Blechdickenübergänge eine freiere und hinsichtlich gewünschter Festigkeits- und/oder Crasheigenschaften optimierte Anordnung der Blechdickenbereiche.

Der erfindungsgemäß hergestellte Türring kann wenigstens einen Teilbereich aufweisen, der weich und duktil ausgebildet ist (sogenannter Weichbereich). Insbesondere ist vorgesehen, dass die Festigkeit bzw. Härte in einem solchen Weichbereich der Ausgangsfestigkeit bzw. - härte des Stahlblechmaterials der Formplatine entspricht, dass also in diesem Bereich keine Härtung bzw. Presshärtung erfolgt. Dies kann bspw. durch eine Beheizung des Presshärtewerkzeugs im betreffenden Werkzeugbereich realisiert werden. Ein solcher Weichbereich kann sich im Übergang zwischen der B-Säule und dem Schweller befinden.

Optional kann der Türring durch wenigstens ein Verstärkungselement lokal verstärkt werden, wie in der DE 11 2017 003 027 T5 beschrieben. Ein solches Verstärkungselement kann vor dem Presshärten auf die Formplatine oder auch noch nach dem Presshärten auf den pressgehärteten Türring aufgebracht und stoffschlüssig befestigt werden. Dies wird auch als "Patchen" bezeichnet.

Im Rahmen der Erfindung sind sowohl die vorausgehend beschriebenen als auch die nachfolgend erläuterten Merkmale nicht nur in der jeweils angegebenen Merkmalskombination, sondern auch in anderen Merkmalskombinationen oder in Alleinstellung anwendbar. Dies gilt auch für die in den Figuren (s. u.) gezeigten Merkmale.

Die Erfindung wird nachfolgend anhand schematischer (nicht maßstabsgerechter) Figuren näher erläutert. Die in den Figuren gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt einen erfindungsgemäß hergestellten Türring.
- Fig. 2: zeigt eine Formplatine zur Herstellung des Türrings der Fig. 1 (Variante 1).
- Fig. 3: zeigt eine andere Formplatine zur Herstellung eines Türrings (Variante 2).
- Fig. 4: zeigt eine weitere Formplatine zur Herstellung eines Türrings (Variante 3).

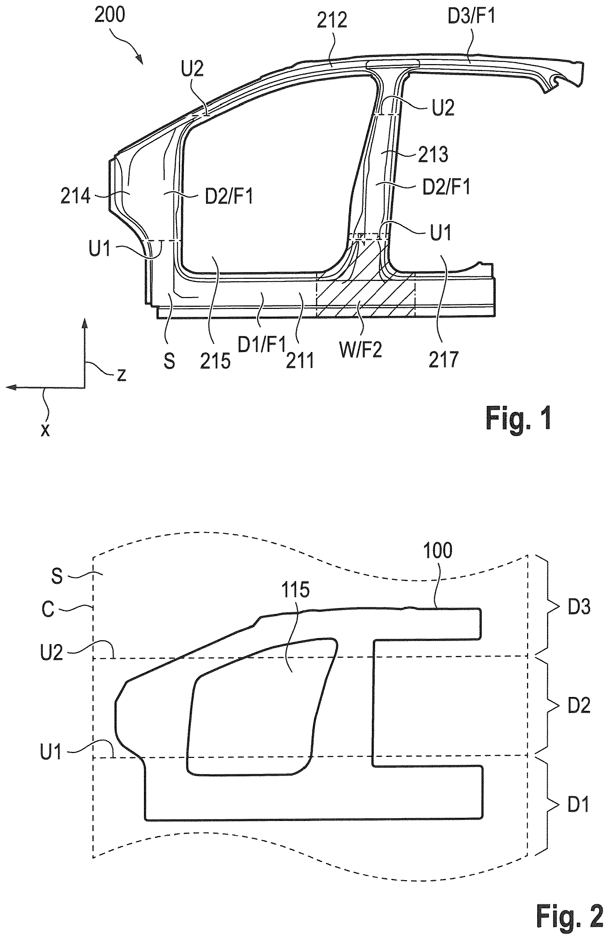

Der in Fig. 1 gezeigte Türring 200 ist ein crashrelevantes Karosserie-Strukturbauteil, das im verbauten Zustand nicht sichtbar ist. Der Türring 200 weist eine vollständig umrandete bzw. umlaufend geschlossene Vordertüröffnung 215 auf. Der Türring 200 weist ferner eine nicht vollständig umrandete Fondtüröffnung 217 auf. Der Türring 200 ist ein pressgehärtetes Blechformteil, das einstückig (in einem Stück) ausgebildet und monolithisch (aus einem Blechstück) gefertigt ist. Trotz dieser einstückigen und monolithischen Ausbildung weist der Türring 200 unterschiedliche Blechdicken und Festigkeiten auf, wie nachstehend beispielhaft erläutert.

Der Schweller 211 weist eine vergleichsweise große Blechdicke D1 (z. B. 2,0 mm) auf, der Dachholm 212 weist eine vergleichsweise geringe Blechdicke D3 (z. B. 1,5 mm) auf und die A-Säule 214 sowie B-Säule 213 weisen eine mittlere Blechdicke D2 (z. B. 1,7 mm) auf. Zwischen diesen Blechdickenbereichen befinden sich Blechdickenübergänge U1, U2. Der Türring 200 kann auch nur zwei Blechdickenbereiche oder mehr als drei Blechdickenbereiche aufweisen, mit einer korrespondierenden Anzahl an Blechdickenübergängen. Ferner können die Blechdickenbereiche auch andere Blechdicken und relative Blechdickenbeziehungen aufweisen.

Der Schweller 211, der Dachholm 212 und die Säulen 213, 214 sind presshärtungsbedingt mit hoher Festigkeit F1 ausgebildet, wobei diese Bereiche auch unterschiedliche Festigkeiten aufweisen können. Der Türring 200 weist zudem einen Weichbereich W auf, innerhalb dessen das Stahlblechmaterial S eine Festigkeit F2 aufweist und weich und duktil, zumindest weicher und duktiler als in den anderen Bereichen 211, 212, 213, 214, ausgebildet ist. Der Weichbereich W befindet sich im Übergang zwischen der B-Säule 213 und dem Schweller 211, sodass sich dort das Stahlblechmaterial S bei einem Seitencrash verformen kann, ohne zu brechen. Durch diesen Weichbereich W verläuft auch der strichliniert angedeutete Blechdickenübergang U1 (D1/D2). Der Türring 200 kann weitere derartige Weichbereiche aufweisen, bspw. im Übergang zwischen der B-Säule 213 und dem Dachholm 212.

Zur Herstellung des Türrings 200 wird die in Fig. 2 gezeigte ebene Formplatine 100, die einen der Vordertüröffnung 215 entsprechenden Türöffnungsausschnitt 115 aufweist, zunächst erwärmt und im erwärmten Zustand in ein Presshärtewerkzeug eingelegt. Im Presshärtewerkzeug wird dann ein Presshärtevorgang durchgeführt, bei dem der Türring 200 in die vorgesehene Endgeometrie (gemäß Fig. 1) umgeformt und bereichsweise unterschiedlich gehärtet bzw. pressgehärtet wird, sodass sich grundsätzlich unabhängig von den Blechdickenbereichen die vorausgehend beschriebenen Festigkeitsbereiche, d. h. die Bereiche 211, 212, 213, 214 mit vergleichsweise hoher Festigkeit F1 und der Weichbereich W mit vergleichsweise geringer Festigkeit F2, einstellen. Hierzu wird im Weiteren auf die obenstehenden Erläuterungen verwiesen.

Die Formplatine 100 wird aus einem flexibel gewalzten Stahlblechmaterial S, das bspw. als Blechband C bereitgestellt wird, ausgeschnitten. Das Blechband C ist in Fig. 2 strichliniert angedeutet. Das Blechband C weist durch flexibles Walzen erzeugte Blechdickenabschnitte auf, die den Blechdickenbereichen des herzustellenden Türrings 200 entsprechende Blechdicken D1, D2 bzw. D3 sowie (in Bandrichtung) angepasste Längen aufweisen. Das Blechband C ist entsprechend dem herzustellenden Türring 200 gewalzt, sodass das Stahlblechmaterial S der daraus ausgeschnittenen Formplatine 100 dementsprechend bereichsweise unterschiedliche Blechdicken D1, D2, D3 aufweist. Zwischen den Blechdickenabschnitten befinden sich strichliniert angedeutete Blechdickenübergänge U1 (D1/D2) sowie U2 (D2/D3), die herstellungsbedingt kontinuierlich bzw. stetig (also ohne Blechdickensprünge) ausgebildet sind. Die Formplatine 100 wird mit vorgegebener Umrissgeometrie so ausgeschnitten, dass sich beim Presshärtevorgang grundsätzlich unabhängig von den Festigkeitsbereichen lagegenau die in Fig. 1 angedeuteten Blechdickenbereiche ergeben, mit sich in Längsrichtung (x-Richtung) erstreckenden Blechdickenübergängen U1, U2. Beim Presshärtevorgang erfolgt idealerweise keine nennenswerte Blechdickenveränderung.

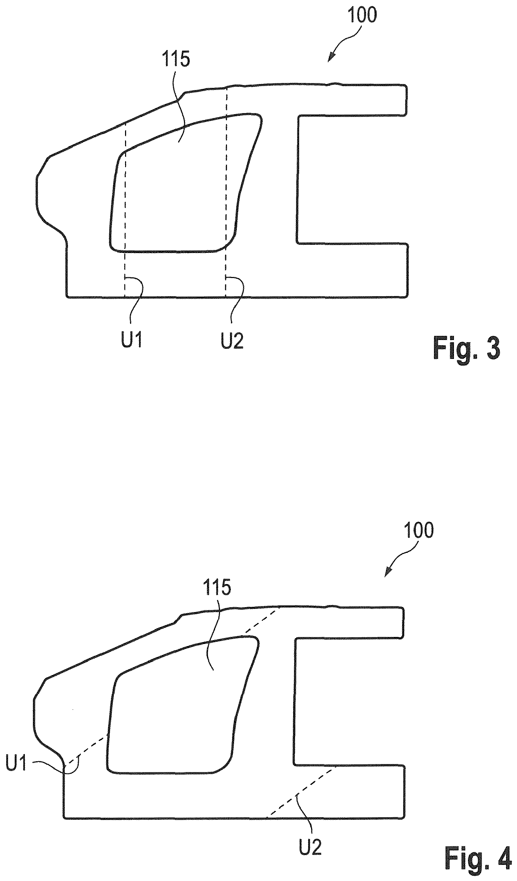

Fig. 3 und Fig. 4 zeigen analog zur Fig. 2 andere Formplatinen 100, bei denen sich die Blechdickenübergänge U1, U2 (unbeachtlich der Blechdicken und relativen Blechdickenbeziehungen) zum einen in Hochrichtung (z-Richtung) und zum anderen schräg zur Hoch- und Längsrichtung des herzustellenden Türrings 200 erstrecken. Die mit diesen Formplatinen hergestellten Türringe weisen dann eine entsprechende Lage und Ausrichtung der Blechdickenbereiche und Blechdickenübergänge auf.

### Bezugszeichenliste

- 100: Formplatine
- 115: Türöffnungsausschnitt
- 200: Türring
- 211: Schweller
- 212: Dachholm
- 213: B-Säule
- 214: A-Säule
- 215: Türöffnung
- 217: Türöffnung
- C: Blechband
- F1: Festigkeit
- F2: Festigkeit
- D1: Blechdicke
- D2: Blechdicke
- D3: Blechdicke
- S: Stahlblechmaterial
- U1: Blechdickenübergang
- U2: Blechdickenübergang
- W: Weichbereich
- x: Längsrichtung (Fahrzeugkoordinatensystem)
- z: Hochrichtung (Fahrzeugkoordinatensystem)

## Patentansprüche

1. Verfahren zur Herstellung eines einstückigen pressgehärteten Türrings (200) für ein Kraftfahrzeug, der unterschiedliche Blechdicken (D1, D2, D3) und Festigkeiten (F1, F2) aufweist, umfassend die Schritte:
- Bereitstellen eines flexibel gewalzten und somit bereichsweise unterschiedliche Blechdicken (D1, D2, D3) aufweisenden Stahlblechmaterials (S);
- Erzeugen einer Formplatine (100) aus dem flexibel gewalzten Stahlblechmaterial (S), wobei die Formplatine (100) wenigstens einen Türöffnungsausschnitt (115) aufweist;
- Erwärmen der Formplatine (100);
- Einlegen der erwärmten Formplatine (100) in ein Presshärtewerkzeug und Ausführen eines Presshärtevorgangs bei dem der Türring (200) in die vorgesehene Endgeometrie umgeformt und bereichsweise unterschiedlich gehärtet wird.

2. Verfahren nach Anspruch 1,
**dadurch gekennzeichnet, dass**
die Formplatine (100) homogen erwärmt und vor dem Einlegen in das Presshärtewerkzeug bereichsweise abgekühlt wird, sodass dann im Presshärtewerkzeug eine bereichsweise unterschiedliche Härtung erfolgt.

3. Verfahren nach Anspruch 1,
**dadurch gekennzeichnet, dass**
die Formplatine (100) homogen erwärmt und in ein bereichsweise unterschiedlich gekühltes Presshärtewerkzeug eingelegt wird, sodass dann während des Presshärtevorgangs eine bereichsweise unterschiedliche Härtung erfolgt.

4. Verfahren nach einem der vorhergehenden Ansprüche,
**dadurch gekennzeichnet, dass**
noch im Presshärtewerkzeug ein Konturbeschnitt des Türrings (200) ausgeführt wird.

5. Verfahren nach einem der Ansprüche 1 bis 4,
**dadurch gekennzeichnet, dass**
die Formplatine (100) derart erzeugt wird, dass sich die Blechdickenübergänge (U1, U2) in Längsrichtung (x) des Türrings (200) erstrecken.

6. Verfahren nach einem der Ansprüche 1 bis 4,
**dadurch gekennzeichnet, dass**
die Formplatine (100) derart erzeugt wird, dass sich die Blechdickenübergänge (U1, U2) in Hochrichtung (z) des Türrings (200) erstrecken.

7. Verfahren nach einem der Ansprüche 1 bis 4,
**dadurch gekennzeichnet, dass**
die Formplatine (100) derart erzeugt wird, dass sich die Blechdickenübergänge (U1, U2) schräg zur Hoch- und Längsrichtung (x/z) des Türrings (200) erstrecken.

8. Verfahren nach einem der vorhergehenden Ansprüche,
**dadurch gekennzeichnet, dass**
der hergestellte pressgehärtete Türring (200) wenigstens einen Weichbereich (W) aufweist.

9. Verfahren nach Anspruch 8,
**dadurch gekennzeichnet, dass**
sich der Weichbereich (W) im Übergang zwischen der B-Säule (213) und dem Schweller (211) befindet.
